# EUROPEAN PATENT SPECIFICATION

(11) **EP 2 597 682 B1**
(45) Date of publication and mention of the grant of the patent: **06.09.2017**
(21) Application number: 11809494.5
(22) Date of filing: 31.05.2011
(51) Int. Cl.: H01L 31/042, E04D 13/18

(54) **SOLAR CELL ARRAY**
SOLARZELLENANORDNUNG
RÉSEAU DE CELLULES SOLAIRES

(30) Priority: 20.07.2010 JP 2010162379
(43) Date of publication of application: 29.05.2013
(73) Proprietor: Kyocera Corporation, Kyoto-shi Kyoto 612-8501 (JP)
(72) Inventor: KAMBARA, Tatsuji, Higashiomi-shi Shiga 527-8555 (JP); HIRATA, Hiroaki, Higashiomi-shi Shiga 527-8555 (JP)
(74) Representative: Viering, Jentschura & Partner mbB Patent- und Rechtsanwälte
(86) International application number: PCT/JP2011/062441
(87) International publication number: WO 2012/011320

(56) References cited:
- EP-A1- 2 309 552
- WO-A1-2009/091238
- WO-A2-2008/028151
- DE-U1-202008 007 837
- DE-U1-202009 001 098
- JP-A- 3 199 566
- JP-A- 11 159 091
- JP-A- 2000 220 268
- JP-A- 2002 013 265
- JP-A- 2003 286 760
- JP-A- 2004 324 181
- US-A1- 2006 086 382

## Description

### Technical Field

The present invention relates to a solar cell array.

### Background Art

A solar cell array includes a plurality of solar cell modules and a mount for fixing the plurality of solar cell modules. Generally, a long and narrow structural member is installed as the mount on a roof of a house, and the solar cell modules are fixed at opposite sides of each module on the mount over its entire length.

Also, as disclosed in Japanese Patent Application Laid-Open No. 2004-324181, a solar cell array is proposed in which solar cell modules are fixed to a roof by using small fixing members instead of the long and narrow structural member.

### Summary of the Invention

### Problem to be Solved by the Invention

In the proposed solar cell array, however, respective sides of adjacent solar cell modules positioned to face each other are fixed by using the fixing member. Accordingly, the each fixing member has to support the dead load, the snow load and the wind load, which are applied to about a half area of one solar cell module. Thus, two or more fixing members are required for one solar cell module, and a larger number of man-hours for installation work and a larger amount of materials are needed in some cases.

Further, when trying to arrange the above-mentioned fixing members at corners of the solar cell module, there is a possibility that, if the roof is distorted, the solar cell modules cannot be arrayed in a good appearance.

DE 202008007837 U1 discloses a solar cell array according to the preamble of claim 1. It relates to an arrangement for a potential connection of a PV module framed by an anodized module frame to a bare metal support section. The PV module is attached to the support section in such a way that at least one module clamp depresses the module frame against the carrier profile. For clamping the module clamp a screw connection is provided. Between a supporting section and the module frame, a small metal plate is inserted, which is penetrated by the screw. The metal plate has retaining means for mounting the metal plate and at least one sharp-edged ridge.

In WO 2009/091238 A1 an attachment system for the attachment of a solar panel is disclosed. The attachment system comprises a support structure for supporting an underside of the panel. Furthermore, the attachment system comprises a pin-shaped attachment member which is connected to the support structure and, in use, extends along one of the edges of the panel and substantially at right angles to the panel. A clamping member which is coupled to the pin-shaped attachment members, in a fitted state, is situated over an edge region on the upper side of the panel and is clamped against the respective edge region by means of the pin-shaped attachment member in order to fasten the panel against the support structure. The clamping member, at least in the pre-fitting state, is rotatable with respect to the pin- shaped attachment member in a plane at right angles to the pin-shaped attachment member. The clamping member has a peripheral edge and is rotatable with respect to a panel to be fitted or fitted on the support structure into an inactive position in which that portion of the peripheral edge which is turned towards the respective panel is not situated over the edge region of the panel, so that fitting a panel on or removing a panel from the support structure is made possible.

An object of the present invention is to provide a solar cell array, which can reduce the number of fixing members used for fixing solar cell modules, and which enables the fixing members and the solar cell modules to be easily arranged at suitable positions.

### Means to Solve the Problem

The present invention provides a solar cell array according to claim 1. Further embodiments of the invention are described in the dependent claims.

According to a solar cell array of one embodiment of the present invention, fixing members can be easily arranged at the suitable positions between corners of the solar cell modules adjacent to each other so that the solar cell modules can be fixed. Thus, one fixing member can support various kinds of loads on about one sheet of the solar cell module to reduce the number of fixing members, which result in reducing the amount of materials, decreasing of the number of installation steps and make solar cell modules arrayed in a good appearance.

### Brief Description of Drawings

Fig. 1 shows an example of a solar cell array 101 according to a first embodiment. (a) is a perspective view, (b) is a sectional view taken along a line A-A' in Fig. 1(a), and (c) is a partial enlarged view of a portion B in Fig. 1(a).
Fig. 2 shows an example of solar cell module 3 used for the solar cell array 101 of Fig. 1. (a) is a plan view, (b) is a sectional view taken along a line C-C' in Fig. 2(a).
Figs. 3 shows an example of mounting member 4 used for the solar cell array 101 illustrated in Fig. 1. (a) and (b) are exploded perspective views of a mounting member 4, when viewed from top and bottom, respectively and (c) is a perspective view of the mounting member 4 and(d) is a sectional view taken along a line F-F' in Fig. 3(c).
Fig. 4 is a perspective view to explain a mounted state of the mounting member 4 illustrated in Fig. 3.
Figs. 5 shows sectional views to successively explain installation steps (a) to (d) of the solar cell array 101 illustrated in Fig. 1.
Fig. 6 explains an installation step of the solar cell array 101 illustrated in Fig. 1. (a) is a perspective view, (b) is a sectional view taken along a plane passing a midpoint of a first member 21 in Fig. 6(a) in a short direction thereof and (c) is a partial enlarged view of a portion G in Fig. 6(b).
Fig. 7 is a side view illustrating an installation method for the solar cell array 101 illustrated in Fig. 1.
Fig. 8 illustrates a state where a solar cell array 201 according to a second embodiment is installed on a sloped surface as a base structure, and (a) is a perspective view when looking at the solar cell array 201 from the light receiving surface side and (b) is a partial enlarged view of a portion A in Fig. 1(a)
Fig. 9 illustrates a section of the solar cell array 201 illustrated in Fig. 8; specifically, (a) is a sectional view taken along a line C-C' in Fig. 8(b), and (b) is a sectional view taken along a line D-D' in Fig. 8(b).
Fig. 10 illustrates the solar cell array 201 illustrated in Fig. 8; specifically, (a) is an exploded perspective view of a portion A in Fig. 8(a), (b) is a perspective view of an engagement member 25 when viewed from a different direction, and (c) is a perspective view of a support 22 when viewed from a different direction.
Fig. 11(a) is a perspective view of a part of a support rail in a solar cell array 301 according to a third embodiment. (b) is a sectional view, partly exploded, of the solar cell array 301. (c) is a partial sectional view of a solar cell array 401 according to a fourth embodiment.
Fig. 12 shows an example of a solar cell array 501 according to a fifth embodiment. (a) and (b) are perspective views of a height adjusting means M used in a solar cell array 501, (c) is a partial sectional view of the solar cell array 501.
Fig. 13 shows an example of a solar cell array 601 according to a sixth embodiment. (a) is a perspective view of a height adjusting means M used in a solar cell array 601 and (b) is a partial sectional view of the solar cell array 601.
Fig. 14 illustrates the height adjusting means M illustrated in Fig. 13. (a) and (b) are exploded perspective views of the solar cell array 601, when viewed from top and bottom, respectively.
Fig. 15 shows an example of a solar cell array 701 according to a seventh embodiment, and it is a partial enlarged view corresponding to Fig. 1(c).

### Embodiment for Carrying Out the Invention

Solar cell arrays according to embodiments of the present invention will be described below with reference to the drawings.

### <First Embodiment>

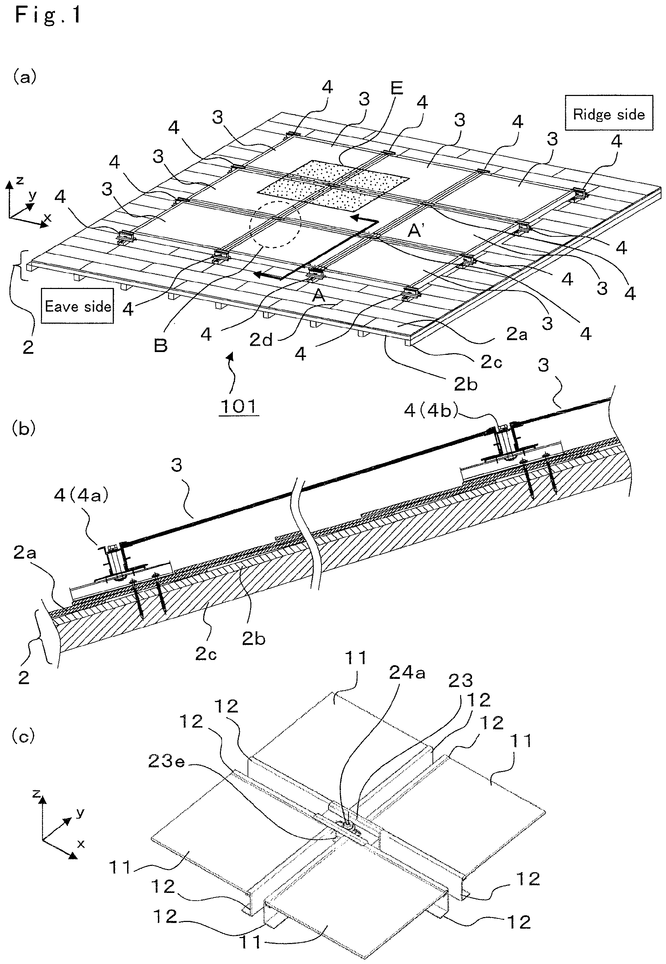

As illustrated in Figs. 1(a) and (b), a solar cell array 101 includes a plurality of solar cell modules 3 and mounting members 4. The solar cell array 101 is fixed onto a base structure 2 (roof surface) that includes a shingle 2a, a sheathing roof board 2b, and a rafter 2c. The plurality of solar cell modules 3 are arrayed in a state not overlapping with each other with their rear surfaces positioned on the lower side. In this embodiment, as illustrated in Fig. 1 (a) the plurality of solar cell modules 3 are arrayed along two directions, i.e., a Y-direction corresponding to a direction in which the sloped surface 2 is sloped, and an X-direction perpendicular to the Y-direction.

### <Solar Cell Module>

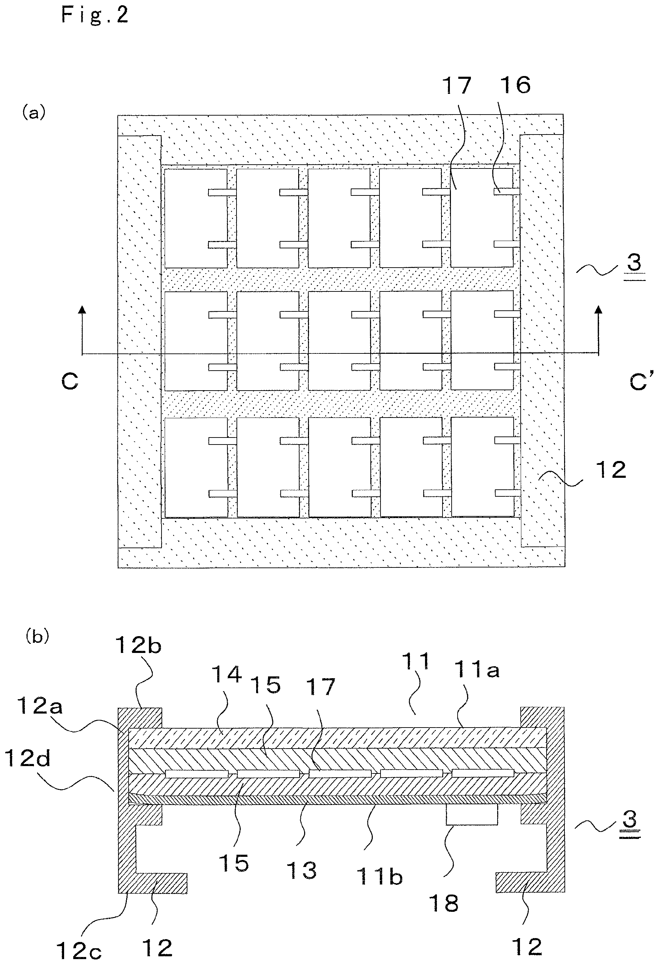

As illustrated in Fig. 2, each of the solar cell modules 3 includes a solar panel 11 and a frame 12.

The solar panel 11 includes, as illustrated in Fig. 2(b), a light receiving surface 11a (one principal surface of a light-transmissive base plate 14) for primarily receiving light, and a light non-receiving surface 11b (one principal surface of a rear-surface protective member 13) that is positioned on the reverse side with respect to the light receiving surface 11a.

The solar panel 11 includes the light-transmissive base plate 14, a pair of filling materials 15, a plurality of solar cell elements 17, the rear-surface protective member 13, and a terminal box 18, which are successively arranged from the side defining the light receiving surface 11a.

The light-transmissive base plate 14 functions as a base plate for the solar cell module 3. The pair of filling materials 15 is comprised of, e.g., a thermosetting resin. The plurality of solar cell elements 17 are protected by the filling materials 15 surrounding them and are electrically connected to each other by inner leads 16. The rear-surface protective member 13 protects the rear surface of the solar cell module 3. The terminal box 18 takes out an output power obtained with the solar cell elements 17 to the outside.

The light non-receiving surface 11b is not limited to a surface in the form not receiving light at all. The light non-receiving surface 11b may receive part of light incoming from the side defining the light non-receiving surface 11b by, for example, using a light-transmissive material to form each of the rear-surface protective member 13 and the filling material 15, the latter being positioned between the solar cell elements 17 and the rear-surface protective member 13.

The solar cell elements 17 are each formed by using a substrate comprised of, e.g., single-crystal silicon or polycrystalline silicon. When the silicon substrates are used, the adjacent silicon substrates may be electrically connected to each other by using the inner leads 16 as described above.

The type of the solar cell element 17 is not limited to particular one. The solar cell element 17 may be formed by using, e.g., a thin-film solar cell comprised of amorphous silicon, a CIGS solar cell, a CdTe solar cell, or a solar cell obtained by forming the thin-film amorphous on a crystalline silicon substrate. For example, the solar cell comprised of amorphous silicon, CIGS or CdTe can be formed by appropriately stacking an amorphous silicon layer, a CIGS layer, or a CdTe layer on a light-transmissive substrate in combination with transparent electrodes, etc.

The terminal box 18 includes a box body, a terminal plate arranged in the box body, and an output cable for leading power to the outside of the box body. The box body can be comprised of, e.g., a modified polyphenylene ether resin (modified PPE resin) or a polypnenylene oxide resin (PPO resin).

The frame 12 has the function of holding the solar panel 11. As illustrated in Figs. 2(a) and 2(b), the frame 12 is a long member for reinforcing an outer periphery of the solar panel 11. In more detail, the frame 12 includes a fitting portion 12a, a frame upper surface 12b, a frame lower surface 12c and a frame lateral surface 12d. The fitting portion 12a is fitted to the solar panel 11 when the solar cell array 101 is installed as described later. The frame upper surface 12b is a principal surface of the frame 12, which is positioned on the side receiving the sunlight. The frame lower surface 12c is a principal surface of the frame 12, which is positioned on the reverse side with respect to the frame upper surface 12b. The frame lateral surface 12d interconnects the frame upper surface 12b and the frame lower surface 12c, and it is directed outwards. The frame 12 can be manufactured, for example, by extruding aluminum.

In the solar cell module 3 constituting the solar cell array 101, the frame 12 positioned on the eave side is called an eave-side frame 12e hereinafter. In this embodiment, the eave side implies the lower side in the Y-direction.

### <Mounting Member>

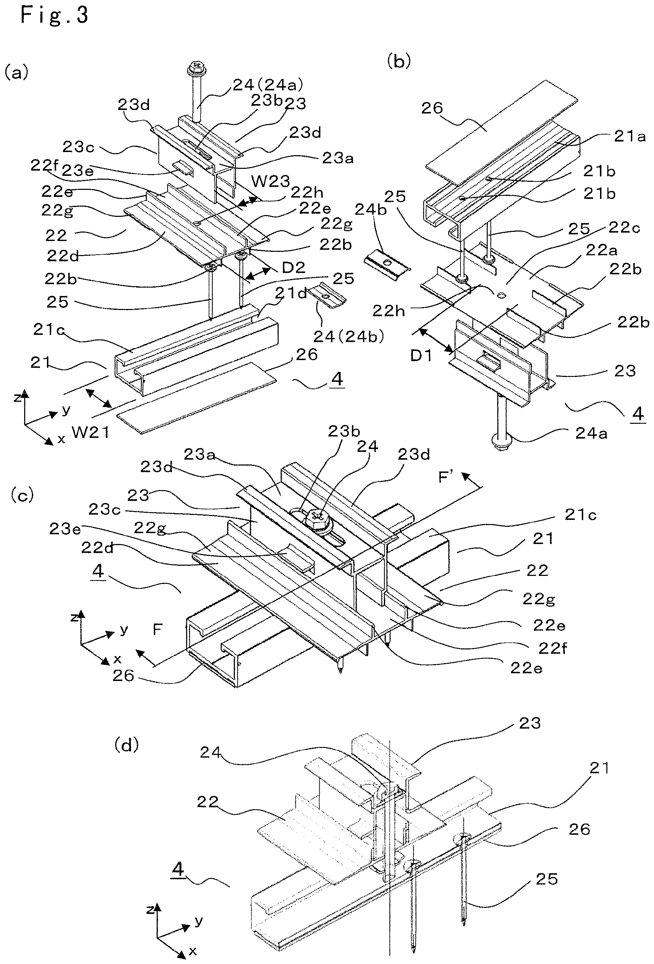

As illustrated in Figs. 1(a) and 1(c), the mounting member 4 is arranged at a position among corners of the adjacent solar cell modules 3. The mounting member 4 includes, as illustrated in Figs. 3(a) and 3(b), a first member 21, a second member 22, a third member 23, a fixing member 24, wood screws 25 and an adhesive member 26.

As illustrated in Figs. 3(c) and 3(d), the third member 23 is arranged on the second member 22, and the second member 22 and the third member 23 are fixed onto the first member 21 by using the fixing member 24.

Further, the wood screws 25 have the function of fixing the first member 21 to the base structure 2. The adhesive member 26 has the function of sealing off a clearance between the first member 21 and the base structure 2 and reducing penetration of rain into the inner side of the base structure 2 along the wood screws 25.

Structures of the first member 21, the second member 22, the third member 23, and the fixing member 24 will be described in detail below with reference to Fig. 3.

In this embodiment, the first member 21 is extended in the Y-direction. The second member 22 is positioned on first member 21 and includes a support portion for supporting the rear surface of the solar cell module 3. The third member 23 is positioned on the second member 22 and includes a clamping portion to clamp the solar cell module 3 in cooperation with the support portion of the second member 22. In this embodiment, the support portion is a part of a second principal surface 22d described later, and the clamping portion is a press-fixing portion 23d described later. Further, the fixing member 24 fixes the second member 22 and the third member 23 to the first member 21, and it vertically penetrates through the second member 22 and the third member 23.

In this embodiment, the second member 22 and the third member 23 are movable along a lengthwise direction of the first member 21.

The mounting member 4 thus constructed can fix various solar cell modules 3 having different sizes in the Y-direction. Also, the fixing position of the mounting member 4 can be finely adjusted depending on a variation of tolerances in the Y-direction among the plurality of solar cell modules 3. Therefore, the number of the mounting members 4 needed to fix one solar cell module 3 can be reduced, and installation accuracy required in fixing of the mounting member 4 can be reduced. As a result, a cost reduction and an improvement of installation efficiency can be realized.

Be it noted that the vertical direction used here implies a Z-direction that is orthogonal to both the X-direction and the Y-direction.

Further, in this embodiment, the first member 21 has an elongate shape in which its lengthwise direction is in the Y-direction. More specifically, the first member 21 is a rectangular rail having a substantially U-shaped cross-section.

In addition, the first member 21 has a principal surface 21a and through-holes 21b. The principal surface 21a is positioned on the reverse side with respect to an opening in the substantially U-shaped cross-section, and it faces the base structure 2. The through-holes 21b are formed in the principal surface 21a, and the wood screws 25 are inserted in the through-holes 21b. The first member 21 is fixed to the base structure 2 by the wood screws 25 inserted in the through-holes 21b.

The principal surface 21a may include a concave-convex portion extending in the lengthwise direction of the first member 21. In such a case, particularly, the through-holes 21b may be formed in the concave portion of the principal surface 21a. With the principal surface 21a having the concave-convex portion, when the dead load, the snow load and the wind load are applied to the mounting member 4, the adhesive member 26 can be more surely avoided from protruding to the surrounding of the first member 21. In addition, the adhesive member 26 having an appropriate thickness can be left to stand around the wood screws 25, thereby reducing penetration of water into the inner side.

In this embodiment, the first member 21 includes a pair of resting portions 21c protruding from both sides of the opening in the substantially U-shaped cross-section, and a gap 21d positioned between the resting portions 21c. The second member 22 has a bolt hole 22h which is formed substantially at a center thereof and which allows insertion of the fixing member 24 therethrough. The resting portions 21c support the second member 22, and the gap 21d allows the fixing member 24 to be moved when the fixing member 24 is loosened, which has been inserted through the bolt hole 22h of the second member 22 to fix the second member 22 onto the first member 21. Thus, the second member 22 is made movable in the Y-direction by the presence of the gap 21d.

The first member 21 can be manufactured by extruding a metal, such as an aluminum alloy. When the first member 21 is comprised of a material other than the aluminum alloy, the first member 21 can be manufactured, for example, by roll-forming or bending a stainless steel plate or a plated steel plate with rolls or a bender.

Further, in this embodiment, before the second member 22 and the third member 23 are fixed to the first member 21 by the fixing member 24, the second member 22 is movable in the Y-direction and the third member 23 is movable in the X-direction and the Y-direction. Accordingly, positioning of the solar cell module 3 can be finely adjusted in the X- and Y-directions.

In this embodiment, the second member 22 includes, in its first principal surface 22a facing the first member 21, a first guide portion 22c for guiding movement of the second member 22 in the lengthwise direction of the first member 21 (i.e., in the Y-direction). As a result, the second member 22 can be more easily moved in the Y-direction.

Moreover, in this embodiment, the second member 22 includes, in its second principal surface 22d facing the third member 23, a second guide portion 22f for guiding movement of the third member 23 in the lengthwise direction of the second member 22 (i.e., in the X- direction). The third member 23 has a through-hole 23b through which the fixing member 24 is inserted, the through-hole 23b allowing the third member 23 to be moved with respect to the first member 21 before the third member 23 is fixed to the first member 21. As a result, the third member 23 can be easily moved in the X-direction. The through-hole 23b is, e.g., a hole elongate in the X-direction.

More specifically, the second member 22 is an elongate plate-like member having the first principal surface 22a and the second principal surface 22d, and it includes a plurality of fins disposed on both the principal surfaces 22a and 22d and extending in the lengthwise direction thereof. The second member 22 is assembled such that the lengthwise direction of the second member 22 is perpendicular to the lengthwise direction of the first member 21.

To describe in more detail, the second member 22 includes, on the first principal surface 22a facing the first member 21, a pair of first projections 22b (first fins) extending in the lengthwise direction thereof (i.e., in the X-direction). The first guide portion 22c is provided by the pair of first projections 22b which are erected from the first principal surface 22a of the second member 22. The pair of first projections 22b are arranged at positions spaced in the widthwise direction of the first member 21 (i.e., in the X-direction), the positions being on both sides of the first member 21 in the widthwise direction thereof. A distance D1 between the pair of first projections 22b spaced in the widthwise direction of the first member 21 is equal to or larger than a widthwise size W21 of the first member 21. With such a simple structure, the above-mentioned movement of the second member 22 in the Y-direction can be facilitated.

Engagement of the first projections 22b with the first member 21 enables the second member 22 to slide in the Y-direction without rotating on the first member 21. Also, when the fixing member 24 is fastened, the second member 22 can be more surely avoided from being rotated and being dislocated.

Further, the first projections 22b contribute to increasing the section modulus in a cross-section perpendicular to the lengthwise direction of the second member 22 and can ensure the strength supporting the solar cell module 3 from below.

In this embodiment, two sets of the pair of first projections 22b each arranged along the X-direction are provided on the first principal surface 22a of the second member 22. Thus, as illustrated in Fig. 3(b), four first projections 22b are formed on the first principal surface 22a.

Further, the second member 22 includes, on the second principal surface 22d facing the third member 23, a pair of second projections 22e (second fins) extending in the lengthwise direction of the second member 22 (i.e., in the X-direction). The second guide portion 22f is provided by the pair of second projections 22e which are erected from the second principal surface 22d of the second member 22 and which are extended in the X-direction. The pair of second projections 22e are arranged at positions spaced in the Y-direction. A distance D2 between the pair of second projections spaced in the Y-direction is equal to or larger than a size W23 of the third member 23 in the Y-direction. With such a simple structure, the above-mentioned movement of the third member 23 in the X-direction can be facilitated.

Be it noted that the third member 23 can be smoothly and stably guided when the distance D2 between the pair of second projections 22e is substantially equal to the size of the third member 23 in its short direction (i.e., in the Y-direction).

Parts of the second principal surface 22d, which are positioned outside the second guide portion 22f (second projections 22e), serve as resting portions 22g on which the solar cell modules 3 are rested. By moving the third member 23 in a state where the solar cell modules 3 are rested on the resting portions 22g, the third member 23 can be easily arranged at a middle between the solar cell modules 3 adjacent to each other in the X-direction. Therefore, the solar cell modules 3 can be easily installed in a good external appearance as illustrated in Fig. 1(c).

Particularly, the mounting member 4 may be installed such that, as illustrated in this embodiment, the lengthwise direction of the first member 21 is parallel to the direction in which the roof is sloped. In that case, when the solar cell modules 3 are successively arranged from the eave side to the ridge side, the second member 22 and the third member 23 are more surely avoided from sliding and shifting, due to the dead loads, etc., from positions where those members are to be arranged. As a result, installation accuracy and installation efficiency can be further improved.

Moreover, in this embodiment, the size of the second member 22 in its lengthwise direction (i.e., in the X-direction) may be smaller than the size of the solar cell module 3 in the X-direction, more specifically, the size of the frame 12 in the X-direction which is disposed as an outer frame of the solar cell module 3. This enables the mounting member 4 to be stably arranged at the corners of the solar cell modules 3.

The size of the second member 22 in its lengthwise direction (i.e., in the X-direction) may be smaller than 1/2 of the size of the solar cell module 3 in the X-direction. The second member 22 described above can be manufactured by using a material and a processing method similar to those for the first member 21.

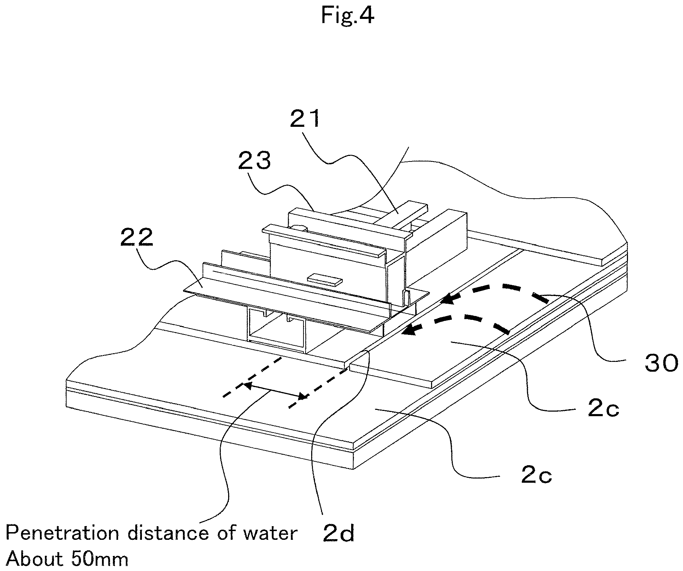

Further, the size of the second member 22 in its lengthwise direction (i.e., in the X-direction) may be 50 mm or longer. In this case, as illustrated in Fig. 4, the first member 21 is preferably fixed with being spaced 50 mm or longer from an abutting portion 2d. With such an arrangement, penetration of water into the inner side of the base structure 2 due to the capillary phenomenon along the wood screws 25 can be reduced. For that reason, the size of the second member 22 in the X-direction may be 100 mm or longer.

Next, the third member 23 is a rail having a substantially T-shaped cross-section. The third member 23 is assembled such that the lengthwise direction of the third member 23 is parallel to the lengthwise direction of the second member 22 and the lengthwise direction of the third member 23 is perpendicular to the lengthwise direction of the first member 21.

To describe in more detail, the third member 23 includes an upper surface portion 23a, an elongate hole 23b, side wall portions 23c, press-fixing portions 23d, and protruded portions 23e. The elongate hole 23b is formed in the upper surface portion 23a. The press-fixing portions 23d are plate-like portions extending outwards from upper ends of the side wall portions 23c in the Y-direction and are provided over the entire length of the third member 23 in its lengthwise direction. The protruded portions 23e are plate-like portions protruding outwards from substantially midpoints of the side wall portions 23c in the Y-direction and have a size corresponding to about 1/3 of the size of the third member 23 in its lengthwise direction.

The elongate hole 23b enables the third member 23 to be moved within the range, over which the elongate hole 23b is formed in the third member 23, in a state where the fixing member 24 is loosened while it remains attached in place.

The press-fixing portion 23d can fixedly clamp the frame 12 of the solar cell module 3 in cooperation with the resting portion 22g of the second member 22. A spacing (spacing in the Z-direction) L1 between the press-fixing portion 23d and the resting portion 22g, in particular, on the side clamping the eave side of the solar cell module 3, is required to be set slightly larger than a size L2 of the frame 12 of the solar cell module 3 in the Z-direction. This facilitates the work for mounting the solar cell modules 3 to the sloped surface sloping in the Y-direction.

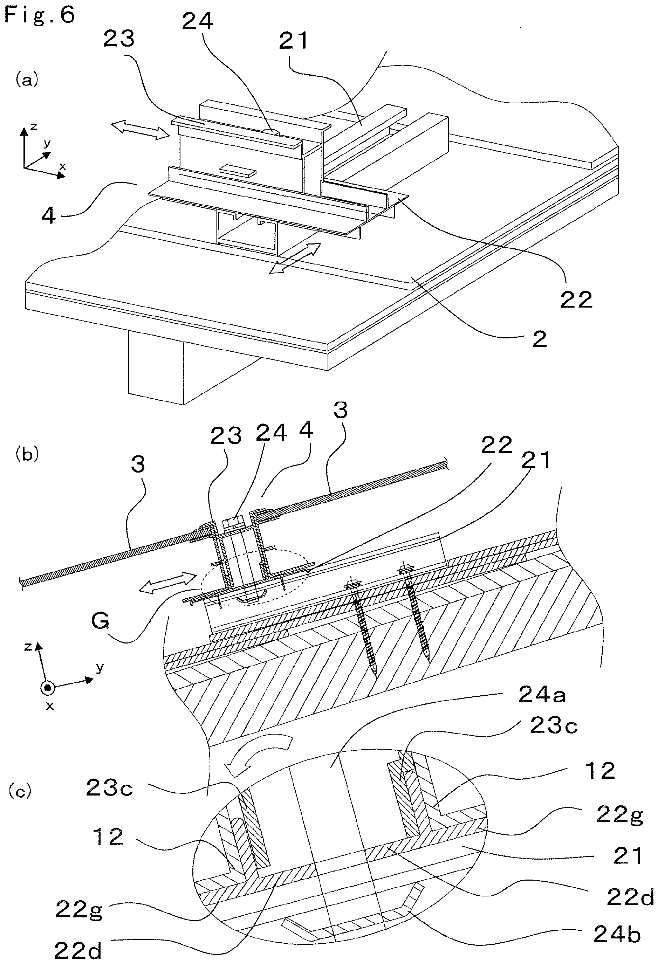

In addition to that the spacing L1 is larger than the size L2, in this embodiment, sizes of the two side wall portions 23c extending downwards from the upper surface portion 23a may differ from each other in the Z-direction as illustrated in Fig. 6(c). Stated another way, in the state after the fixing member 24 has been mounted, a spacing L1-1 between the resting portion 22g positioned on the eave side and the press-fixing portion 23d is larger than a spacing L1-2 between the resting portion 22g positioned on the ridge side and the press-fixing portion 23d. More specifically, the side wall portion 23c positioned on the eave side contacts the second principal surface 22d of the second member 22, while the side wall portion 23c positioned on the ridge side does not contact the second principal surface 22d of the second member 22. With such a structure, when the solar cell module 3 on the eave side, which has been previously mounted, is fixed from the ridge side by using the mounting member 4, the mounting member 4 can be slid to the desired position along the sloping direction. Furthermore, when the mounting member 4 arranged at the desired position is fixed by the fixing member 24, the press-fixing portion 23d is inclined toward the eave side, whereby the solar cell module 3 can be more tightly fixed by the mounting member 4.

Each of the protruded portions 23e serves as a guide portion for adjusting the spacing between the solar cell modules 3 in the X-direction when the solar cell modules 3 are mounted to the mounting members 4, thereby improving workability. In other words, the protruded portion 23e is arranged in a state sandwiched between the solar cell modules 3 adjacent to each other in the X-direction. Accordingly, the spacing between the adjacent solar cell modules 3 can be easily held constant and the solar cell modules 3 can be arrayed in a good external appearance.

The third member 23 described above can be manufactured by using a material and a processing method similar to those for the first member 21.

In this embodiment, the size of the third member 23 in the Y-direction is smaller than the size of the second member 22 in the X-direction. Hence, the third member 23 can be stably moved on the second member 22.

The fixing member 24 includes a bolt 24a and a bolt lock 24b. The bolt 24a is inserted through both the elongate hole 23b of the third member 23 and the bolt hole 22h of the second member 22, and is fixed to the bolt lock 24b on the inner side than the gap 21d of the first member 21. With such an arrangement, when the fixing member 24 is in the loosened state, the second member 22 is movable in the lengthwise direction of the first member 21 (i.e., in the Y-direction) and the third member 23 is movable in the lengthwise direction of the second member 22 (i.e., in the X-direction). From the viewpoint of corrosion resistance, the fixing member 24 may be comprised of stainless steel or hot-dip galvanized steel. The bolt lock 24b can be manufactured by pressing or tapping.

The wood screws 25 are inserted through the through-holes 21b of the first member 21, and they fix the first member 21 to the base structure 2. The wood screws 25 can also be comprised of stainless steel or hot-dip galvanized steel.

The adhesive member 26 is attached to the principal surface 21a of the first member 21 and is stuck to the base structure 2. Therefore, the adhesive member 26 serves to protect the surroundings of the fixed positions of the wood screws 25 against rain and moisture when the first member 21 is fixed to the base structure 2. The adhesive member 26 can be prepared by cutting, e.g., an adhesive sheet of silicone sealant or butyl, into the form of strip.

### <Installation Method>

Installation procedures for the solar cell array 101 according to this embodiment will be described below.

First, a predetermined position where each mounting member 4 is to be installed is marked on the base structure 2 by using an ink pot, for example. At that time, from the viewpoint of reducing penetration of water, the predetermined position is selected such that the wood screws 25 for the mounting member 4 are fixed to the rafter 2c at a position other than the abutting portion 2d of the shingle 2a constituting the base structure 2. In this case, because the wood screws 25 are fixed to the rafter 2c that is a main structural member of a house, the strength in fixing the mounting member 4 to the base structure 2 is increased.

Then, the mounting member 4 is assembled by loosely fixing the first member 21, the second member 22, and the third member 23 in the positional relationship, illustrated in Fig. 3(c), with the fixing member 24, and attaching the adhesive member 26 to the principal surface 21a of the first member 21. Further, the mounting member 4 is bonded to the base structure 2 by using the adhesive member 26 in alignment with the mark put on the base structure 2, and it is fixed to the base structure 2 by using the wood screws 25.

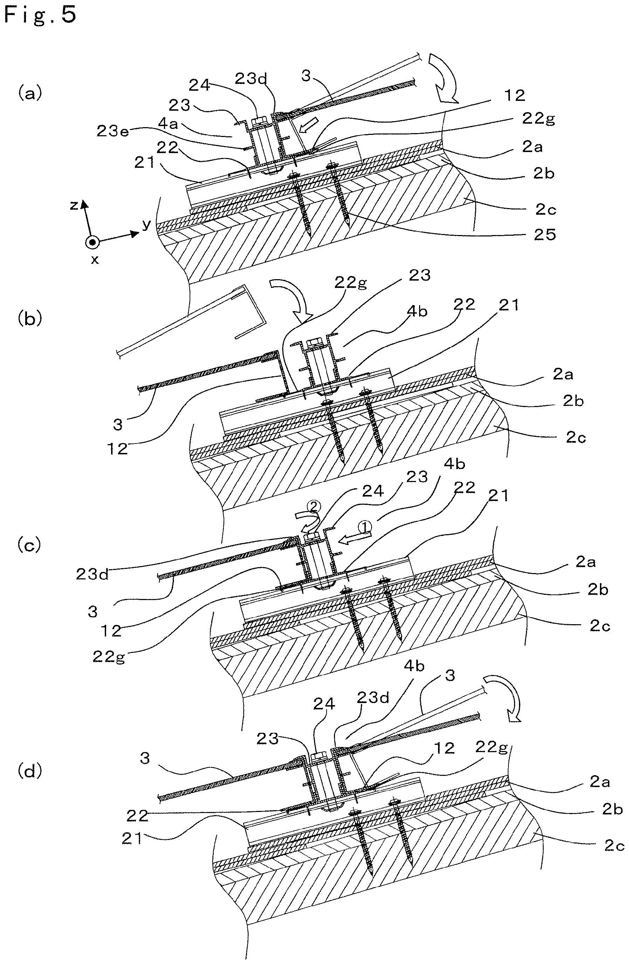

Next, as illustrated in Fig. 5(c), the fixing member 24 of each of mounting members 4a in the first row, counting from the eave side of the base structure 2, is tightly fastened to fix the mounting member 4a, thereby fixing the relative positions of the second member 22 and the third member 23. At that time, the fixed position of the mounting member 4a is adjusted such that, as illustrated in Fig. 1(c), the protruded portion 23e of the third member 23 is located between the solar cell modules 3 adjacent to each other in the X-direction. Then, the frame 12 on the eave side of the solar cell module 3 is inserted to the gap between the press-fixing portion 23d and the resting portion 22g.

Because, as described above, the spacing L1 between the press-fixing portion 23d and the resting portion 22g, which cooperatively hold the eave side of the solar cell module 3, is slightly larger than the size L2 of the frame 12 of the solar cell module 3 in the Z-direction, the solar cell module 3 can be smoothly inserted to the gap between the press-fixing portion 23d and the resting portion 22g without loosening the fixing member 24.

Next, as illustrated in Fig. 5(b), the solar cell module 3 is laid down toward the base structure 2 and the frame 12 of the solar cell module 3 is rested on the resting portion 22g of a mounting member 4b in the second row.

Then, as illustrated in Fig. 5(c), the second member 22 of the mounting member 4b in the second row is moved toward the eave side in the Y-direction along with the third member 23, whereby the ridge side of the solar cell module 3 is held between the press-fixing portion 23d and the resting portion 22g of the mounting member 4b. At that time, the position of the second member 22 in the X-direction is controlled to adjust the fixed position thereof such that the protruded portion 23e is located between two solar cell modules 3 adjacent to each other in the X-direction.

Then, the fixing member 24 of the mounting member 4b in the second row is more tightly fastened to fix the ridge side of the solar cell module 3 by the mounting member 4b.

The solar cell modules 3 in the second and subsequent rows can be installed similarly to the installation method for the solar cell module 3 in the first row, and hence duplicate description is not repeated (see Fig. 5(d)).

Further, in the mounting member 4 according to this embodiment, as illustrated in Fig. 6(a), the third member 23 is movable in the X-direction. Therefore, after installing the first member 21 to be away from the position possibly causing deterioration of waterproof, e.g., the position of the abutting portion 2d of the shingle 2a, the third member 23 can be moved to the desired position and the solar cell module 3 can be fixed at the desired position.

Also, since the second member 22 and the third member 23 are movable on the first member 21 in the Y-direction as illustrated in Fig. 6(b), various solar cell modules 3 having different sizes in the Y-direction can be fixed by using one type of the mounting member 4.

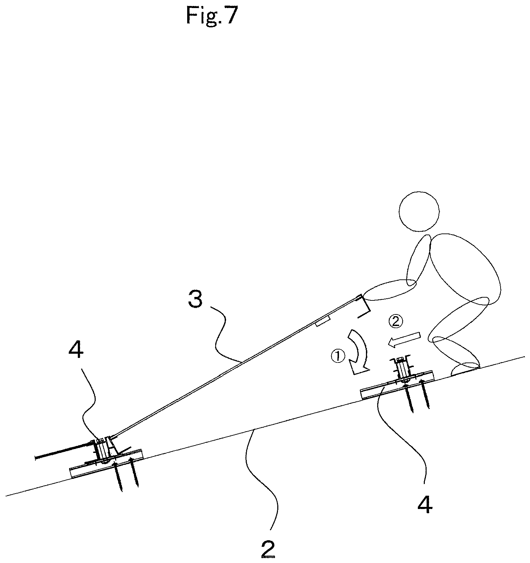

Moreover, as illustrated in Fig. 7, after resting the solar cell module 3 on the first member 21, the second member 22 and the third member 23 can be moved in the Y-direction for clamping and fixing of the solar cell module 3. Accordingly, a damage of the solar cell elements 17 in the solar cell module 3 possibly caused by a worker stepping on the solar cell module 3 during the work can be reduced.

The solar cell module 3 to which the present invention can be applied is not limited to the super-straight structure type described in the foregoing embodiment. The present invention is also applicable to other various structures, such as the glass package structure and the substrate structure.

While the present embodiment has been described, by way of example, in connection with the solar cell array 101 that is installed on the sloped surface, the installation state is not limited to the illustrated one. The solar cell array 101 may be installed on, e.g., a horizontal surface.

### <Second Embodiment>

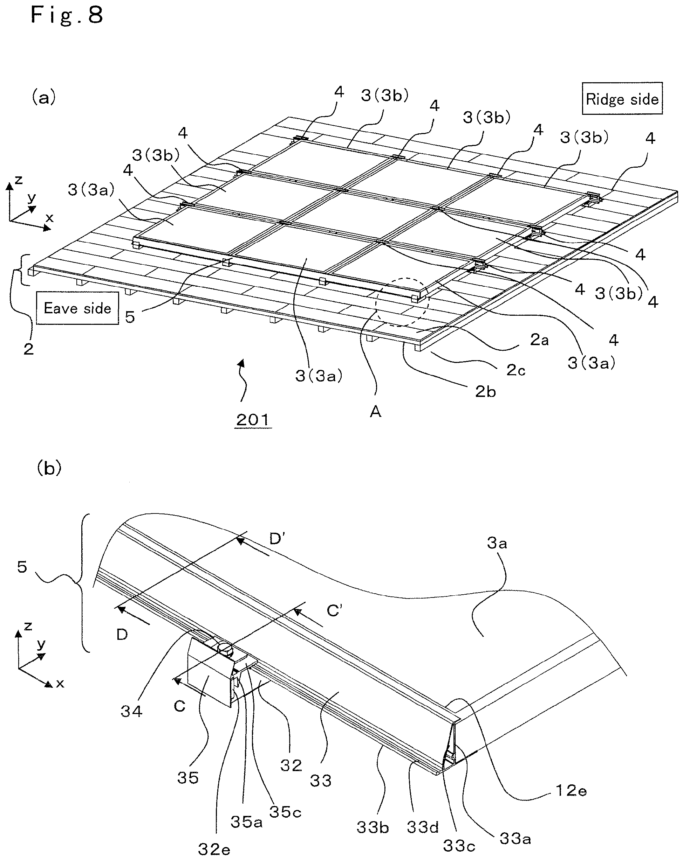

A solar cell array 201 according to a second embodiment will be described in detail below with reference to Figs. 8 to 10. Be it noted that description of similar components to those in the first embodiment is omitted.

### <Solar Cell Array>

As illustrated in Fig. 8, the solar cell array 201 according to this embodiment further includes an eave-side member 5 for fixing an eave-side frame 12e of the solar cell module 3 arranged at a lowermost position in the Y-direction in which the solar cell array 201 is sloped.

Also in this embodiment, as illustrated in Fig. 8, a sloping direction of the base structure 2 is called the Y-direction, a direction normal to the base structure 2 is called the Z-direction, and a direction orthogonal to both the Y-direction and the Z-direction is called the X-direction hereinafter. Further, of the solar cell modules 3 adjacent to each other in the Y-direction, the one positioned on the lowermost side (i.e., the side nearest to the eave) is called a first solar cell module 3a, and the solar cell modules 3 positioned other than the lowermost side are each called a second solar cell module 3b.

### <Eave-Side Member>

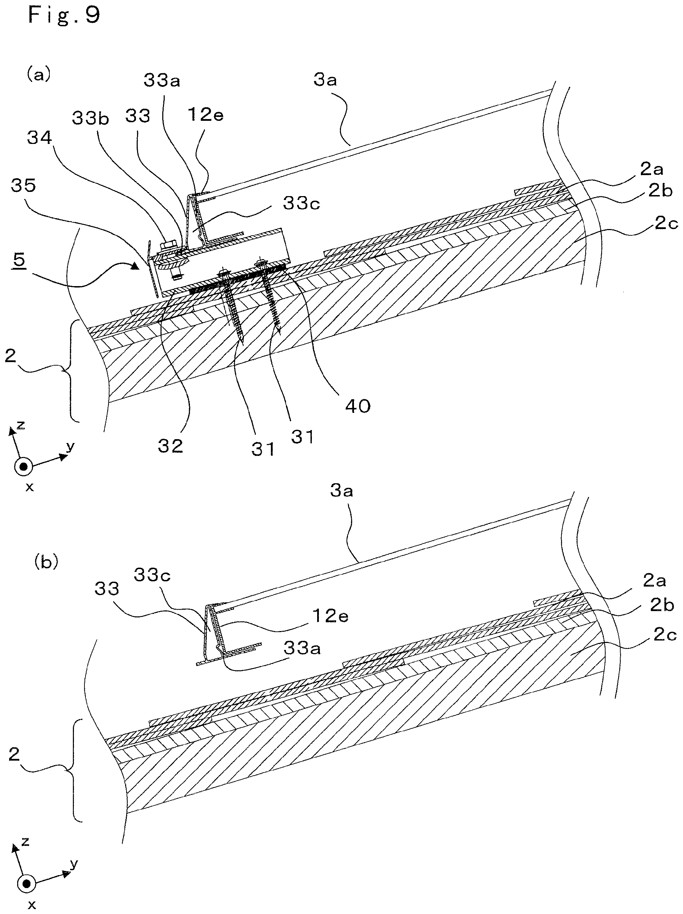

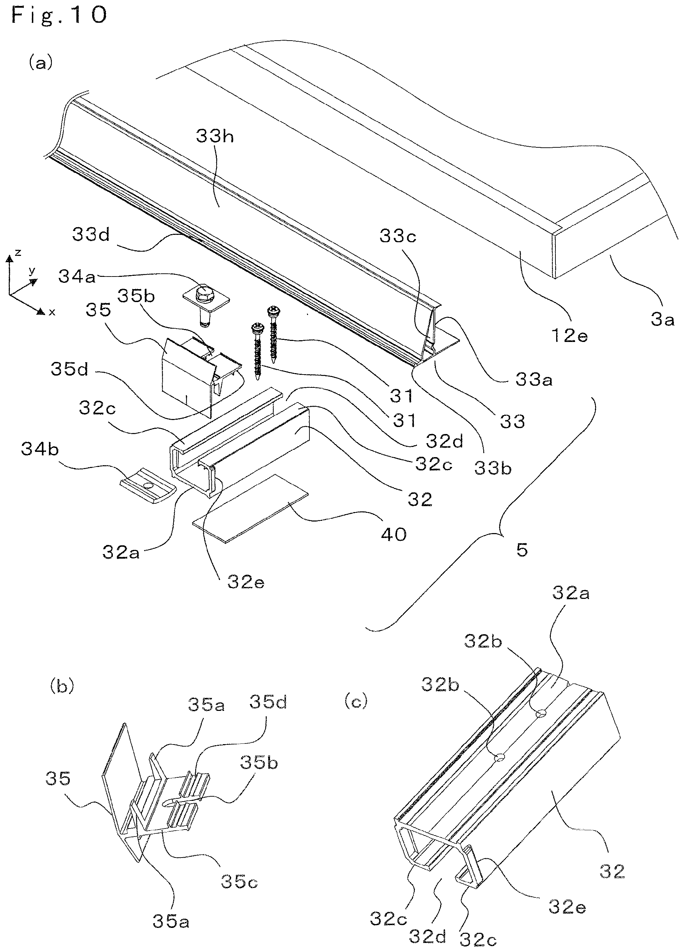

The eave-side member 5 for supporting the eave side of the first solar cell module 3a will be described in detail with reference to Figs. 9 and 10 in addition to Fig. 8.

In the solar cell array 201 according to this embodiment, as illustrated in Figs. 8, 9 and 10, the eave-side member 5 includes a base member (support) 32, a protective member 33, and an engagement member 35. The protective member 33 is fixed onto the base member 32 by using both a screw member 34 and the engagement member 35. It is noted that one protective member 33 is fixed by a plurality of base members 32, which are elongate in the sloping direction and which are fixed onto the sloped surface of the base structure 2.

The eave-side frame 12e of the first solar cell module 3a is fitted and fixed to a later-described rail groove 33a of the protective member 33. That is to say, as illustrated in Fig. 8(b), a lower-side portion of the first solar cell module 3a, which is positioned on the lowermost side in the Y-direction among the plurality of solar cell modules 3, is received in the protective member 33, and the protective member 33 is fixed to the base structure 2.

First, the protective member 33 is described in detail. As illustrated in Fig. 8(b), the protective member 33 is a long member extending in the X-direction. The size of the protective member 33 in its lengthwise direction is substantially the same as that of one or plural solar cell modules 3 in the X-direction.

In this embodiment, as illustrated in Fig. 10(a), the protective member 33 includes a main body 33h, a rail groove 33a, a clamped member 33b, and a hollow portion 33c.

The rail groove 33a is opened in a direction facing the eave-side frame 12e of the solar cell module 3. The rail groove 33a is elongate in the X-direction. Further, the size of the rail groove 33a in the Z-direction is substantially the same as that of the eave-side frame 12e in the Z-direction. Therefore, the solar cell module 3 can be fixed to the protective member 33 by fitting the eave-side frame 12e to the rail groove 33a.

The clamped portion 33b is protruded in a direction away from the rail groove 33a. The clamped portion 33b can be fixed onto the base member 32 in a state clamped between the base member 32 and the engagement member 35 both described later. More specifically, the clamped portion 33b includes a concave portion 33d engaging with the engagement member 35.

The hollow portion 33c is a space adjacent to the rail groove 33a. As illustrated in Fig. 10(a), the protective member 33 includes a closed cross-section. In other words, the hollow portion 33c is positioned adjacently on the eave side of the rail groove 33a and is a space defined in the closed cross-section.

Thus, since the protective member 33 includes the rail groove 33a receiving one side portion of the solar cell module 3a and the hollow portion 33c formed in the body and extending in the lengthwise direction of the rail groove 33a, the eave-side frame 12e is reinforced and the solar cell module 3 can be more surely avoided from deformation of the eave-side frame 12e and/or slipping off of the eave-side frame 12e from the solar panel 11 when snow falls or drops.

The base member 32 will be described in detail below. The base member 32 has a similar shape to that of the first member 21 in the solar cell array 101 according to the above-described first embodiment. More specifically, as illustrated in Fig. 10(c), the base member 32 includes a principal surface 32a, through-holes 32b, resting portions 32c, a gap portion 32d, and third projections 32e.

The through-holes 32b are formed in the principal surface 32a for insertion of wood screws 31 therethrough. The base member 32 is fixed to the base structure 2 by the wood screws 31 inserted through the through-holes 32b.

The principal surface 32a includes a concave-convex portion extending in the lengthwise direction of the base member 32. With the principal surface 32a including the concave-convex portion, a similar advantageous effect to that described above in connection with the first member 21 can be obtained.

The base member 32 has a substantially U-shaped cross-section, and the resting portions 32c are protruded from both sides of an opening of the U-shaped cross-section. The gap portion 32d is formed between the resting portions 32c. The resting portions 32c support the protective member 33.

The third projections 32e are disposed on lateral surfaces of the base member 32 and are engageable with stopper portions 35a of the engagement member 35 described below.

The engagement member 35 is now described in detail. The engagement member 35 includes the stopper portions 35a, a U-shaped hole 35b, a clamping portion 35c, and fourth projections 35d.

The U-shaped hole 35b is a hole through which the screw member 34 is inserted. The clamping portion 35c clamps the protective member 33 in cooperation with the base member 32. The stopper portions 35a are engageable with the third projections 32e on the lateral surfaces of the base member 32, respectively, and the clamping portion 35c of the engagement member 35 is engageable with the concave portion 33d in the clamped portion 33b of the protective member 33.

Further, as illustrated in Fig. 10, the engagement member 35 is fixed to the resting portions 32c of the base member 32 by the screw member 34. By fastening the screw member 34, the concave portion 33d in the protective member 33 and the fourth projections 35d of the engagement member 35 are engaged with each other, and the clamped portion 33b of the protective member 33 is clamped by the resting portions 32c of the base member 32 and the engagement member 35. As a result, the protective member 33 can be fixed onto the base member 32. At that time, since the third projections 32e of the base member 32 and the stopper portions 35a are engaged with each other, the protective member 33 can be more surely avoided from dropping.

The base member 32, the engagement member 35, and the protective member 33, described above, can be manufactured by a similar manufacturing method to that described above for the first member 21.

Further, the screw member 34 includes a bolt 34a and a bolt lock 34b. The bolt 34a is inserted through the U-shaped hole 35b of the engagement member 35 and is fixed to the bolt lock 34b on the inner side than the gap portion 32d of the base member 32. The structure and the material of the screw member 34 can be selected similarly to those of the above-described fixing member 4.

The wood screws 31 are inserted through the through-holes 32b of the base member 32, thereby fixing the base member 32 to the base structure 2. The structure and the material of the wood screws 31 can be selected similarly to those of the above-described wood screws 25.

An adhesive member 40 has the function of sealing off the clearance between the base member 32 and the base structure 2 and reducing penetration of rain into the inner side of the base structure 2 along the wood screws 31. The adhesive member 40 is attached to the principal surface 32a of the base member 32 and is stuck to the base structure 2. Thus, when the base member 32 is fixed to the base structure 2, the adhesive member 40 protects the surroundings of the fixed positions of the wood screws 31 against rain and moisture. The structure and the material of the adhesive member 40 can be selected similarly to those of the above-described adhesive member 26.

### <Installation Method>

An installation method for fixing the eave-side member 5 and fixing the first solar cell module 3a to the eave-side member 5 will be described below.

First, the base member 32 is fixed to an optionally selected position on the base structure 2 by the wood screws 31 with the adhesive member 40 interposed therebetween. The strength in fixing the base member 32 can be increased by selecting, as the fixed position of the base member 32, a position where the wood screws 31 for fixing the base member 32 are driven into the rafter 2c of the base structure 2.

Next, the engagement member 35 is loosely mounted onto the base member 32 by the screw member 34. Thereafter, the clamped portion 33b of the protective member 33 is inserted between the clamping portion 35c of the engagement member 35 and the resting portions 32c of the base member 32.

Then, the concave portion 33d in the protective member 33 is engaged with the fourth projections 35d of the engagement member 35, and the protective member 33 is fixed onto the base member 21 by fastening the screw member 34.

Next, the eave-side frame 12e of the first solar cell module 3a is inserted and fixed to the rail groove 33a of the fixed protective member 33.

As described above, the solar cell array 201 according to this embodiment includes a structure that the eave-side frame 12e of the first solar cell module 3a is inserted and fixed to the rail groove 33a of the protective member 33. Therefore, when snow is deposited on the eave side of the solar cell array 201 and a load in a torsional direction is applied to the eave-side member 5 and the eave-side frame 12e of the first solar cell module 3a, the protective member 33 and the eave-side frame 12e can be torsionally deformed as an integral unit. Accordingly, torsional rigidity of the solar cell array 201 on the eave side can be increased and torsional deformation of the solar cell array 201 can be reduced. As a result, it is possible to reduce slipping-off of the solar panel 11 from the eave-side frame 12e and slipping-off of the first solar cell module 3a from the solar cell array 201. In addition, the load resistance performance of the solar cell array 201 against deposited snow can be enhanced, and the reliability of the solar cell array 201 in a heavy snow area can be improved.

In the protective member 33 in this embodiment, as described above, the hollow portion 33c is positioned adjacent to the rail groove 33a on the opposite side of the rail groove 33a. Because the hollow portion 33c is a space in the closed cross-section in which cross-section of the member is closed, the torsional rigidity of the protective member 33 can be effectively increased, and the load resistance performance of the solar cell array 201 can be enhanced.

Further, in the solar cell array 201 of this embodiment, the eave sides of the first solar cell modules 3a are arrayed in a row in the X-direction along the protective member 33, and accordingly eave-side portions of the first solar cell modules 3a, which are most clearly viewed from the outer side, appear to be aligned. As a result, a design of the solar cell array can be improved.

In this embodiment, the protective member 33 is held between the base member 32 and the engagement member 35. Therefore, the protective member 33 is movable in its lengthwise direction, and the base member 32 can be arranged and fixed at an optionally selected position with respect to the protective member 33. For example, the base member 32 can be fixed to the rafter 2c of the base structure 2 by the wood screws 31 in order to increase the mounting strength of the solar cell array 201. By arranging the base member 32 at such a position, the reliability of the solar cell array 201 can be improved.

Moreover, the installation method for the solar cell array 201 according to this embodiment is carried out by inserting the eave-side frame 12e of the first solar cell module 3a to the rail groove 33a of the protective member 33 from the ridge side. Accordingly, the worker can install the solar cell array 201 without stepping on the solar cell module 3. It is hence possible to reduce the occurrence of cracks in the solar cell elements 17 during the installation work, and to improve workability.

### <Third Embodiment>

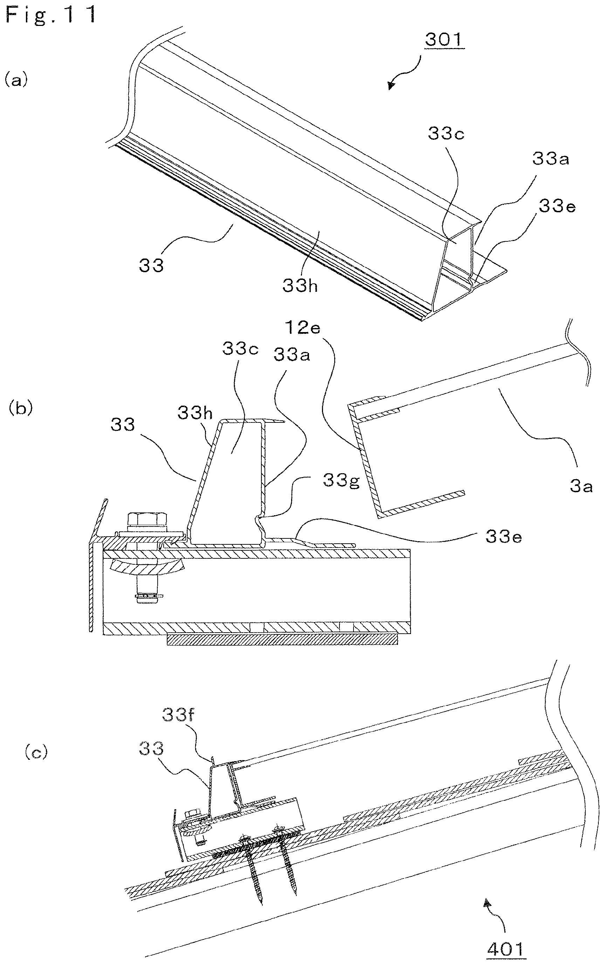

A solar cell array 301 according to a third embodiment will be described below with reference to Figs. 11(a) and 11(b).

As illustrated in Fig. 11(a), the solar cell array 301 according to the third embodiment differs from the solar cell array 201 according to the second embodiment in structure of the protective member 33.

In this embodiment, the hollow portion 33c of the protective member 33 has a quadrangular closed cross-section when it is cut in a direction perpendicular to the lengthwise direction of the rail groove 33a.

By such a form, the torsional rigidity is increased about twice in comparison with the hollow triangular cross-section that is substantially equal in size to the quadrangular closed cross-section. As a result, the strength of the solar cell array 301 on the eave side can be greatly increased.

To improve a design, the hollow portion 33c may have a trapezoidal shape in cross-section, which includes an oblique side on the eave side of the hollow portion.

Further, in the solar cell array 301 according to this embodiment, as illustrated in Fig. 11(b), the rail groove 33a of the protective member 33 includes an inclined portion 33e. The inclined portion 33e is disposed in an opening of the rail groove 33a and has an inclined surface that is inclined downwards as illustrated. The inclined surface is inclined such that it comes closer to the base member 32 as the distance from a main body 33h of the protective member 33 increases.

In this embodiment, the lower-side portion of the first solar cell module 3a is guided into the rail groove 33a by the inclined portion 33e. Accordingly, as the eave-side frame 12e of the first solar cell module 3a is progressively inserted to the opening of the rail groove 33a, the eave-side frame 12e is more tightly clamped by the rail groove 33a.

In this embodiment, as illustrated in Fig. 11(b), a bent portion 33g is further provided on the ridge side of the main body 33h. The bent portion 33g serves as a spring such that the rail groove 33a can clamp the eave-side frame 12e by an appropriate force. With the provision of the bent portion 23 g, vibration of the first solar cell module 3a in a gap between the first solar cell module 3a and the rail groove 33a under a strong wind can be reduced, and hence transmission of unpleasant vibrations to the interior of a house can be reduced.

### <Fourth Embodiment>

A solar cell array 401 according to a fourth embodiment will be described below with reference to Fig. 11 (c).

As illustrated in Fig. 11(c), the solar cell array 401 according to the fourth embodiment differs from the third embodiment in structure of the protective member 33.

In the fourth embodiment, the protective member 33 includes a third projection 33f on its upper surface. The third projection 33f is a snow-guard projection extending in the lengthwise direction of the rail groove 33a and projecting upwards of the protective member 33.

The third projection 33f thus provided serves as a snow guard capable of making snow deposited on the solar cell array 401 less likely to slip down in large momentum. Since the protective member 33 includes the structure with greater torsional rigidity as described above in the present embodiment, the present embodiment can also realize a guard against snow while reducing damage of the solar cell array 401.

While the second to fourth embodiments of the present invention have been described above, the present invention is not limited to the foregoing embodiments. For example, the present invention may be applied to various sloped surfaces, such as outer wall surfaces or outer surfaces of buildings, other than the roof.

### <Fifth Embodiment>

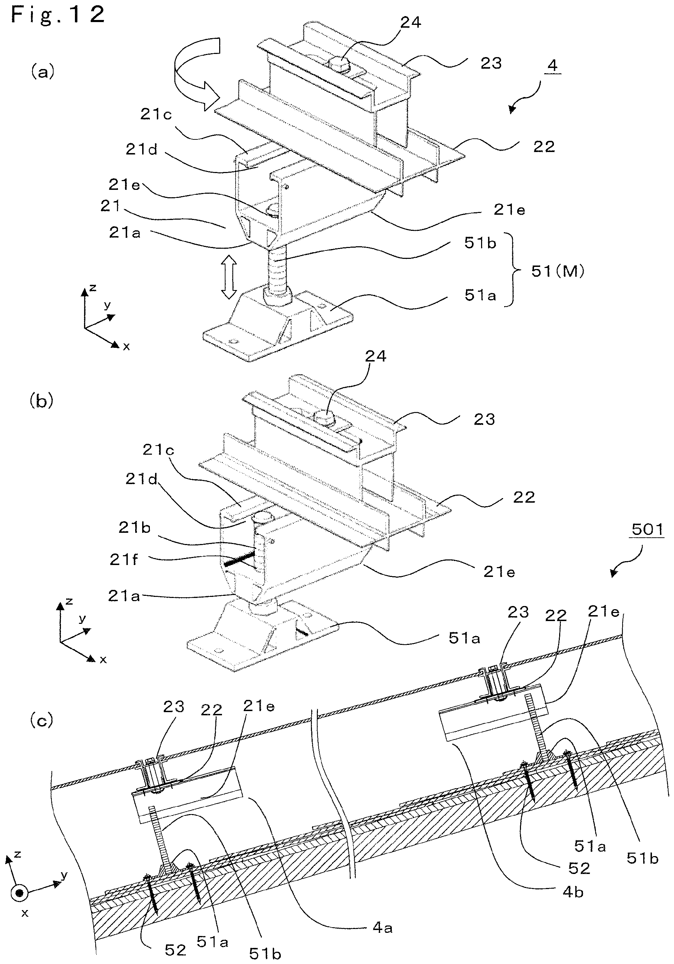

A solar cell array 501 according to a fifth embodiment will be described below with reference to Figs. 12(a) to 12(c).

In the present embodiment, the solar cell array 501 further includes a height adjusting means M. The height adjusting means M serves to move at least the first member 21, the second member 22, and the third member 23 of the mounting member 4 in the Z-direction. With the height adjusting means M capable of moving those members in the Z-direction, the solar cell modules 3 can be stably fixed with a good external appearance even when the installation surface, e.g., the roof surface, has irregularities. In particular, because the installed position of the mounting member 4 in the Z-direction can be finely adjusted, the solar cell modules 3 can be flatly installed even on the installation surface having irregularities that have been caused due to, e.g., distortions of the roof.

In this embodiment, the solar cell array 501 further includes a support member 51. The height adjusting means M is comprised of a male screw and a female screw, which can mesh with each other and are provided respectively in the first member 21 and in the support member 51.

More specifically, in this embodiment, the support member 51 includes a base portion 51a and a male screw 51b. The first member 21 includes a female screw portion 21e. The male screw 51b is inserted through the female screw portion 21e. The first member 21 is rotatable in an XY-plane with the male screw 51b being an axis of rotation.

Further, the base portion 51a of the support member 51 is fixed to the installation surface, e.g., the roof surface, by a plurality of wood screws 52. At that time, the wood screws 52 are positioned perpendicularly to the base portion 51a. The base portion 51a of the support member 51 can be comprised of, e.g., aluminum or stainless steel. The male screw 51b can be comprised of, e.g., steel or stainless steel.

Procedures for adjusting the height in this embodiment will be described below.

First, the support member 51 is fixed to a desired position on the installation surface.

Then, as illustrated in Fig. 12, the male screw 51b of the support member 51 is meshed with the female screw portion 21e of the first member 21 to which the second member 22 and the third member 23 are fixed in advance, thereby holding the first member 21 on the base portion 51a of the support member 51. A unit obtained by integrally assembling the second member 22 and the third member 23 with the first member 21 will be referred to as an "assembled body" hereinafter.

The assembled body (i.e., the first member 21, the second member 22, and the third member 23) is rotated about the male screw 51b as an axis of rotation such that the resting portions 21c of the first member 21 lie at a desired position in the height direction (Z-direction) from the installation surface. At that time, for each rotation of the assembled body, the position of the assembled body can be moved in the vertical direction by a height corresponding to a pitch of grooves of the male screw 51b. Therefore, it is sufficient that the pitch of grooves of the male screw 51b is properly selected depending on the height of irregularities in the installation surface.

Fig. 12(a) illustrates a state where the assembled body is arranged at the highest position in the Z-direction, and Fig. 12(b) illustrates a state where the assembled body is arranged at the lowest position in the Z-direction. The size of the male screw 51b is set such that, as illustrated in Fig. 12(b), an upper end of the male screw 51b does not project upwards from the resting portions 21c of the first member 21 in the state where the assembled body is at the lowest position in the Z-direction. By such a setting, when the assembled body is rotated, the male screw 51b can be less likely to interfere with the rotation of the assembled body.

Further, in this embodiment, the base portion 51a of the support member 51 has an elongate shape extending in the sloping direction (Y-direction). The wood screws 52 for fixing the base portion 51a to the base structure 2 are arrayed along the sloping direction (Y-direction). Thus, the lengthwise direction of the base portion 51a is parallel to the lengthwise direction of the first member 21, and the base portion 51a is fixed to the sloped surface by the plural wood screws 52 that are arrayed in the lengthwise direction of the base portion 51a. With such a structure, the dead load of the solar cell module 3 acting in the Y-direction in which the solar cell module 3 is sloped can be firmly supported. As a result, the reliability of the solar cell array 501 can be increased.

Moreover, in this embodiment, as illustrated in Figs. 12(a) to 12(c), the female screw portion 21e is positioned on the side near an end of the first member 21 in its lengthwise direction (i.e., in the Y-direction). More specifically, the female screw 21e is provided at a position inwardly spaced by 1/4 of the length of the first member 21 from the end of the first member 21 in its lengthwise direction. With such an arrangement, as contrastively illustrated in Fig. 12(c) with respect to a mounting member 4a and a mounting member 4b, a region where the second member 22 is movable in the Y-direction can be sufficiently provided with respect to the size of the first member 21 by rotating the first member 21 such that the first member 21 is positioned relatively long toward the eave side or the ridge side from the support member 51. Accordingly, the component cost can be reduced and a wider movable region, i.e., a wider rotatable region, of the assembled body can be ensured.

While the present embodiment has been described above with respect to the case where the first member 21 includes the female screw and the support member 51 includes the male screw, the embodiment is not limited to the illustrate one. For example, the first member 21 may include the male screw and the support member 51 may include the female screw.

### <Sixth Embodiment>

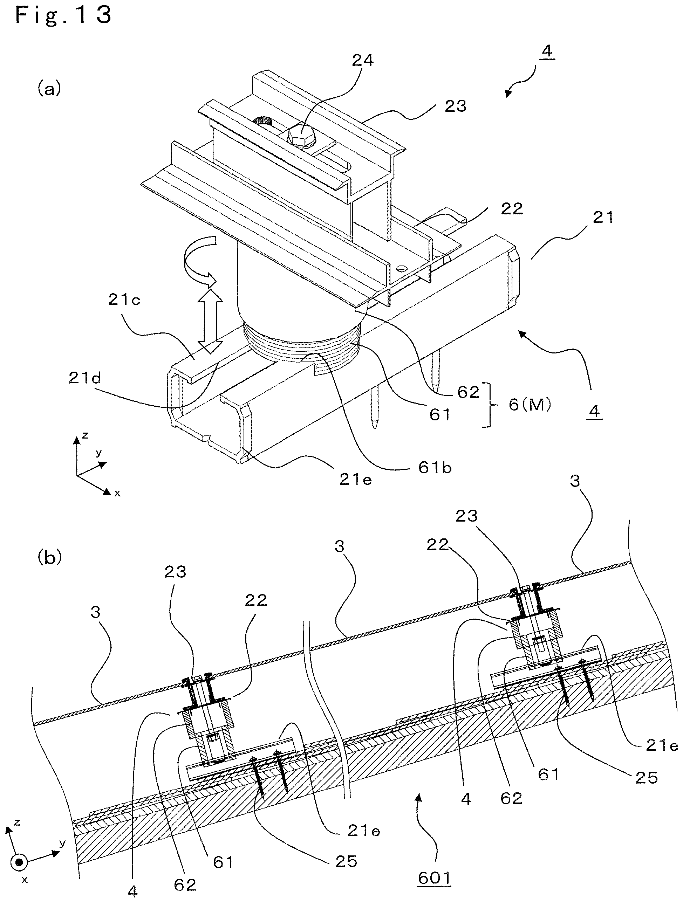

A solar cell array 601 according to a sixth embodiment will be described below with reference to Fig. 13(a) to 13(c). The solar cell array 601 according to the present embodiment differs from the fifth embodiment in structure of the height adjusting means M.

In the sixth embodiment, the height adjusting means M is constituted by a cylindrical fourth member 6 arranged between the first member 21 and the second member 22. More specifically, the fourth member 6 includes a first cylindrical portion 61 and a second cylindrical portion 62, which can be meshed with each other. Each of the first cylindrical portion 61 and the second cylindrical portion 62 has a hollow cylindrical shape. For example, resin or aluminum can be used as materials of the first cylindrical portion 61 and the second cylindrical portion 62.

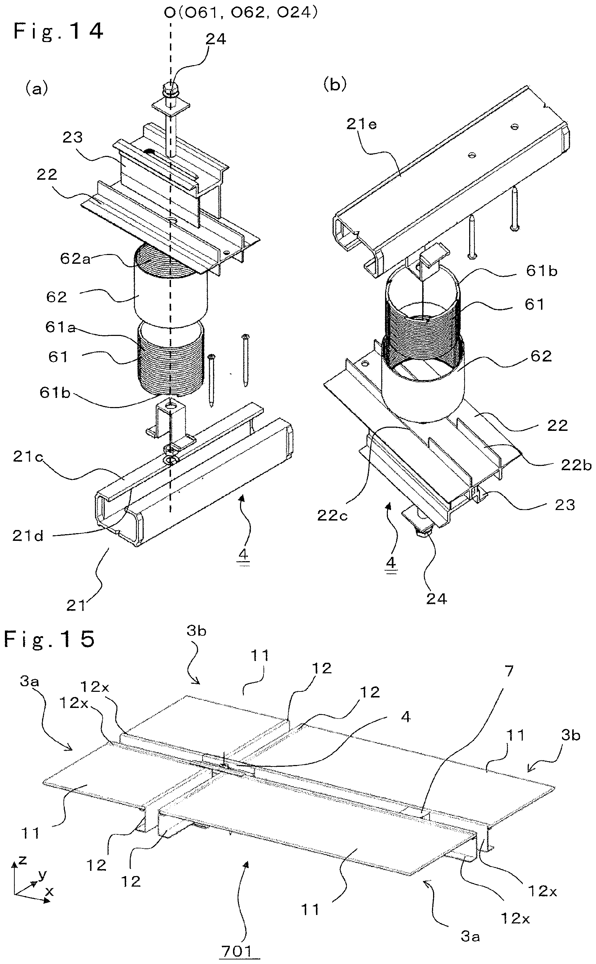

In this embodiment, as illustrated in Figs. 14(a) and 14(b), the first cylindrical portion 61 includes a first screw portion 61a on its outer peripheral surface, and the second cylindrical portion 62 includes a second screw portion 62a formed in its inner peripheral surface and meshing with the first screw portion 61a. The first screw portion 61a is a male screw, and the second screw portion 62a is a female screw.

With such an arrangement, in this embodiment, the second member 22 and the third member 23 can be moved together in the height direction (Z-direction) by rotating the second cylindrical portion 62. In this embodiment, therefore, as in the fifth embodiment, the solar cell modules 3 can be flatly installed even on the installation surface having small irregularities that have been caused due to, e.g., distortions of the roof.

In this embodiment, the first cylindrical portion 61 is arranged on the first member 21, and the second member 22 is arranged on the second cylindrical portion 62. Further, the first cylindrical portion 61 includes, at its lower end, engagement portions 61b engaging with the first member 21. More specifically, the engagement portions 61b are engaged with both the pair of resting portions 21c and the gap 21d of the first member 21. By the engagement portions 61b described above, the first cylindrical portion 61 is movable in the lengthwise direction of the first member 21 (i.e., in the Y-direction), and the second member 22 and the third member 23 are movable in the lengthwise direction of the first member 21.

To ensure that the engagement portions 61b of the first cylindrical portion 61 are engaged with the first member 21, the outer diameter of the first cylindrical portion 61 is larger than the width of the gap 21d. Particularly, when the outer diameter of the first cylindrical portion 61 is larger than the size of the first member 21 in its widthwise direction (i.e., in the X-direction), the first member 21 can stably support the first cylindrical portion 61.

In this embodiment, as illustrated in Fig. 13(b), an outer periphery of the second cylindrical portion 62 is fitted to the first guide portion 22c provided by the first projections 22b on the second member 22. As a result, dislocation of the fourth member 6 can be reduced.

Moreover, in this embodiment, as illustrated in Fig. 14(a), a center line 061 of the first cylindrical portion 61, a center line 062 of the second cylindrical portion 62, and a center line 024 of the fixing member 24 are arranged on one linear line. Thus, in this embodiment, the height adjusting means M (i.e., the first cylindrical portion 61 and the second cylindrical portion 62) are positioned right below the second member 22 and the third member 23 unlike the fifth embodiment.

With such an arrangement, the dead load is applied in the axial direction of the first cylindrical portion 61 and the second cylindrical portion 62, and hence a moment does not occur unlike the fifth embodiment. Accordingly, the strength of the solar cell array 601 can be increased.

Be it noted that, as in this embodiment, the second member 22 is not always required to be arranged in direct contact with the first member 21. It is at least required that the first member 21, the second member 22, and the third member 23 are relatively movable in the X-, Y- and Z-directions as described above.

While the present embodiment has been described above with respect to the case where the first cylindrical portion 61 arranged on the lower side includes the male screw at its outer periphery and the second cylindrical portion 62 arranged on the upper side includes the female screw at its inner periphery, the embodiment is not limited to the illustrated one. It is just required that the male screw is provided in one of the first cylindrical portion 61 and the second cylindrical portion 62, and the female screw is provided in the other.

Additionally, the efficiency of the height adjusting operation is increased with the arrangement that, of the two cylindrical portions, the outer diameter of the cylindrical portion arranged on the upper side and rotated for adjusting the height is larger than that of the cylindrical portion arranged on the lower side.

While the height adjusting means M according to the embodiments have been described above, the height adjusting means M usable in the present invention are not limited to the illustrated ones.

### <Seventh Embodiment>

A solar cell array 701 according to a seventh embodiment will be described below with reference to Fig. 15. The solar cell array 701 according to the present embodiment differs from the solar cell array 101 according to the first embodiment in further including a spacer arranged between two solar cell modules 3a and 3b adjacent to each other in the Y-direction.

More specifically, as illustrated in Fig. 15, the solar cell array 701 includes a spacer 7 arranged between two solar cell modules 3 adjacent to each other in the Y-direction. The spacer 7 is arranged in an intermediate portion of the solar cell module 3 in the X-direction that is perpendicular to the Y-direction. Stated another way, the spacer 7 is arranged between a frame 12x of the first solar cell module 3a, extending in the X-direction, and a frame 12x of the second solar cell module 3b, extending in the X-direction.

With such an arrangement, the spacer 7 can be mounted in place by a simple fitting operation, and the distance between the first solar cell module 3a and the second solar cell module 3b can be properly specified by the spacer 7. As a result, the solar panel 11 can be more surely avoided from slipping off from the frame 12, and good workability is ensured.

This embodiment increases the number of components of the solar cell array, but it increases the advantageous effect of reducing torsional deformation of the solar cell module 3. Therefore, this embodiment is preferably applied to the solar cell module 3 having a larger size in the X-direction.

### Description of Symbols

- 101,201,301,401,501,601,701:: solar cell array
- 2:: base structure
- 2a:: shingle
- 2b:: sheathing roof board
- 2c:: rafter
- 2d:: abutting portion
- 3:: solar cell module
- 3a:: first solar cell module
- 3b:: second solar cell module
- 4:: mounting member
- 5:: eave-side member
- 11:: solar panel
- 11a:: light receiving surface
- 11b:: light non-receiving surface
- 12:: frame
- 12a:: fitting portion
- 12b:: frame upper surface
- 12c:: frame lower surface
- 12d:: frame lateral surface
- 12e:: eave-side frame
- 13:: rear-surface protective member
- 14:: light-transmissive base plate
- 15:: filling material
- 16:: inner lead
- 17:: solar cell element
- 18:: terminal box
- 21:: first member
- 21a:: principal surface
- 21b:: through-hole
- 21c:: resting portion
- 21d:: gap
- 21e:: female screw portion
- 22:: second member
- 22a:: first principal surface
- 22b:: first projection
- 22c:: first guide portion
- 22d:: second principal surface
- 22e:: second projection
- 22f:: second guide portion
- 22g:: resting portion
- 22h:: bolt hole
- 23:: third member
- 23a:: upper surface portion
- 23b:: elongate hole
- 23 c:: side wall portion
- 23d:: press-fixing portion
- 23e:: protruded portion
- 24:: fixing member
- 24a:: bolt
- 24b:: bolt lock
- 25:: wood screw
- 26:: adhesive member
- 30:: water route
- 31:: wood screw
- 32:: base member (support)
- 32a:: principal surface
- 32b:: through-hole
- 32c:: resting portion
- 32d:: gap portion
- 32e:: third projection
- 33:: protective member
- 33a:: rail groove
- 33b:: clamped member
- 33c:: hollow portion
- 33d:: concave portion
- 33e:: inclined portion
- 33f:: third projection
- 33g:: bent portion
- 33h:: main body
- 34:: screw member
- 34a:: bolt
- 34b:: bolt lock
- 35:: engagement member
- 35a:: stopper portion
- 35b:: U-shaped hole
- 35c:: clamping portion
- 35d:: fourth projection
- 40:: adhesive member
- M:: height adjusting means
- 51:: support member
- 51a:: base portion
- 51b:: male screw
- 52:: wood screw
- 6:: fourth member
- 61:: first cylindrical portion
- 61a:: first screw portion
- 61b:: engagement portion
- 62:: second cylindrical portion
- 62a:: second screw portion
- 7:: spacer

## Claims

1. A solar cell array (101, 201, 301, 401, 501, 601, 701) comprising:
a plurality of solar cell modules (3) arrayed along at least one of an X-direction and a Y-direction perpendicular to the X-direction in a not-overlapped state with rear surfaces of the solar cell modules being directed downwards; and
a mounting member (4) arranged between corners of the solar cell modules adjacent to each other,
the mounting member including:
a first member (21) extending in the Y-direction:
a second member (22) located on the first member and including a support portion supporting the rear surface of the solar cell module;
a third member (23) located on the second member and including a clamping portion clamping the solar cell module in cooperation with the support portion of the second member; and
a fixing member (24) vertically penetrating through the second member and the third member and fixing the second member and the third member to the first member,
the second member and the third member being movable along the Y-direction,
wherein the first member (21) has an elongate shape with the Y-direction, being a lengthwise direction thereof, and
before the second member (22) and the third member (23) are fixed to the first member by the fixing member (24), the second member is movable in the Y-direction and the third member is movable in the X-direction and the Y-direction,
**characterized in that**
the second member (22) includes, in a second principal surface (22d) thereof facing the third member (23), a second guide portion (22f) guiding movement of the third member in the X-direction with respect to the second member, and
the third member includes a through-hole (23b) through which the fixing member is inserted and which is elongated in the X-direction, the through-hole (23b) allowing the third member (23) to be moved in the X-direction before the third member (23) is fixed to the first member (21).

2. The solar cell array (101, 201, 301, 401, 501, 601, 701) according to Claim 1, wherein the second member (22) includes, on a first principal surface (22a) thereof facing the first member (21), a first guide portion (22c) guiding movement of the second member in the Y-direction.

3. The solar cell array (101, 201, 301, 401, 501, 601, 701) according to Claim 2, wherein the first guide portion (22c) is comprised of a pair of first projections erected from the first principal surface (22a) of the second member (22) and arranged at positions spaced in a widthwise direction of the first member (21), the positions being on both sides of the first member in the widthwise direction of the first member, and
a distance between the pair of first projections in the widthwise direction of the first member is equal to or larger than a widthwise size of the first member.

4. The solar cell array (101, 201, 301, 401, 501, 601, 701) according to Claim 1, wherein the second guide portion (22f) is provided by a pair of second projections (22e) erected from the second principal surface (22d) of the second member (22) and extending in the X-direction,
the pair of second projections are arranged at positions spaced in the Y-direction, and
a distance between the pair of second projections in the Y-direction is equal to or larger than a size of the third member (23) in the Y-direction.

5. The solar cell array (101, 201, 301, 401, 501, 601, 701) according to any one of Claims 1 to 4, wherein a size of the second member in the X-direction is smaller than a size of the solar cell module in the X-direction.

6. The solar cell array (101, 201, 301, 401, 501, 601, 701) according to any one of Claims 1 to 5, wherein a size of the third member (23) in the Y-direction is smaller than a size of the second member (22) in the X-direction.

7. The solar cell array (101, 201, 301, 401, 501, 601, 701) according to any one of Claims 1 to 6, wherein the third member (23) further includes a protruded portion held between the solar cell modules (3) adjacent to each other.

8. The solar cell array (101, 201, 301, 401, 501, 601, 701) according to Claim 1, wherein the plurality of solar cell modules (3) are arrayed at least along the Y-direction in which the solar cell array is sloped, and
the solar cell array further comprises a protective member (33) supporting a lower-side portion of a first solar cell module (3a), which is positioned on the lowermost side in the Y-direction among the plurality of solar cell modules, a plurality of supports elongated in the Y-direction, wherein the protective member is fixed to the supports.

9. The solar cell array (101, 201, 301, 401, 501, 601, 701) according to Claim 8, wherein the protective member (33) includes a body, a rail groove being elongate in the X-direction and receiving the lower-side portion of the first solar cell module (3a), and a hollow portion (33c) formed in the body and extending in a lengthwise direction of the rail groove, and the rail groove includes an inclined portion (33e) for guiding the lower-side portion of the first solar cell module into the rail groove.

10. The solar cell array (101, 201, 301, 401, 501, 601, 701) according to any one of Claims 1 to 9, further comprising height adjusting means (M) for moving at least the second member (22) and the third member (23) of the mounting member (4) in a Z-direction that is orthogonal to the X-direction and the Y-direction.

11. The solar cell array (101, 201, 301, 401, 501, 601, 701) according to Claim 10, further comprising a support member (51) arranged below the first member and supporting the first member (21), wherein the height adjusting means (M) includes a male screw (51b) and a female screw (21e), which are provided on the first member and the support member, respectively, and which are capable of meshing with each other.

12. The solar cell array (101, 201, 301, 401, 501, 601, 701) according to Claim 10, wherein the height adjusting means (M) is provided as a cylindrical fourth member (6) arranged between the first member (21) and the second member (22), the fourth member comprises a first cylindrical portion (61) including a first screw portion (61a) in an outer peripheral surface thereof, and a second cylindrical portion (62) including a second screw portion (62a) in an inner peripheral surface thereof, the second screw portion meshing with the first screw portion,
the first cylindrical portion is arranged on the first member, and the second member is arranged on the second cylindrical portion,
the first cylindrical portion includes, at a lower end thereof, an engagement portion engaging with the first member, and
a center line of the first cylindrical portion, a center line of the second cylindrical portion, and a center line of the fixing member are arranged on one linear line.

## Patentansprüche

1. Eine Solarzellenanordnung (101, 201, 301, 401, 501, 601, 701), aufweisend:
eine Mehrzahl von Solarzellenmodulen (3), die entlang mindestens einer von einer X-Richtung und einer Y-Richtung senkrecht zu der X-Richtung in einem nicht-überlappten Zustand angeordnet sind, wobei hintere Flächen der Solarzellenmodule nach unten gerichtet sind, und
ein Montage-Element (4), das zwischen Ecken der Solarzellenmodule, welche benachbart zueinander sind, angeordnet ist,
wobei das Montage-Element aufweist:
ein erstes Element (21), das sich in der Y-Richtung erstreckt,
ein zweites Element (22), das auf dem ersten Element angeordnet ist und einen Stützabschnitt aufweist, der die hintere Fläche des Solarzellenmoduls abstützt,
ein drittes Element (23), das auf dem zweiten Element angeordnet ist und einen Klemmabschnitt aufweist, der das Solarzellenmodul in Zusammenwirkung mit dem Stützabschnitt des zweiten Elements einklemmt, und
ein Befestigungselement (24), das das zweite Element und das dritte Element vertikal durchdringt und das zweite Element und das dritte Element an dem ersten Element befestigt,
wobei das zweite Element und das dritte Element entlang der Y-Richtung bewegbar sind,
wobei das erste Element (21) eine langgestreckte Form hat, wobei die Y-Richtung eine Längsrichtung davon ist, und,
bevor das zweite Element (22) und das dritte Element (23) durch das Befestigungselement (24) an dem ersten Element befestigt sind, das zweite Element in der Y-Richtung bewegbar ist und das dritte Element in der X-Richtung und der Y-Richtung bewegbar ist,
**dadurch gekennzeichnet, dass**
das zweite Element (22) in einer zweiten Hauptfläche (22d) davon, die dem dritten Element (23) zugewandt ist, einen zweiten Führungsabschnitt (22f) aufweist, der die Bewegung des dritten Elements in der X-Richtung bezüglich des zweiten Elements führt, und
das dritte Element ein Durchgangsloch (23b) aufweist, durch das hindurch das Befestigungselement eingesetzt ist und das in der X-Richtung langgestreckt ist, wobei das Durchgangsloch (23b) ermöglicht, dass das dritte Element (23) in der X-Richtung bewegt wird, bevor das dritte Element (23) an dem ersten Element (21) befestigt ist.

2. Die Solarzellenanordnung (101, 201, 301, 401, 501, 601, 701) gemäß Anspruch 1, wobei das zweite Element (22) auf einer ersten Hauptfläche (22a) davon, die dem ersten Element (21) zugewandt ist, einen ersten Führungsabschnitt (22c) aufweist, der die Bewegung des zweiten Elements in der Y-Richtung führt.

3. Die Solarzellenanordnung (101, 201, 301, 401, 501, 601, 701) gemäß Anspruch 2, wobei der erste Führungsabschnitt (22c) aus einem Paar von ersten Vorsprüngen gebildet ist, die von der ersten Hauptfläche (22a) des zweiten Elements (22) aufgerichtet sind und an Positionen angeordnet sind, die in einer Breitenrichtung des ersten Elements (21) im Abstand sind, wobei die Positionen auf beiden Seiten des ersten Elements in der Breitenrichtung des ersten Elements liegen, und
ein Abstand zwischen dem Paar erster Vorsprünge in der Breitenrichtung des ersten Elements größer oder gleich einer Breitengröße des ersten Elements ist.

4. Die Solarzellenanordnung (101, 201, 301, 401, 501, 601, 701) gemäß Anspruch 1, wobei der zweite Führungsabschnitt (22f) durch ein Paar von zweiten Vorsprüngen (22e) bereitgestellt ist, die von der zweiten Hauptfläche (22d) des zweiten Elements (22) aufgerichtet sind und sich in der X-Richtung erstrecken,
das Paar von zweiten Vorsprüngen in Positionen angeordnet ist, die in der Y-Richtung im Abstand voneinander sind, und
eine Entfernung zwischen dem Paar zweiter Vorsprünge in der Y-Richtung größer oder gleich einer Größe des dritten Elements (23) in der Y-Richtung ist.

5. Die Solarzellenanordnung (101, 201, 301, 401, 501, 601, 701) gemäß irgendeinem der Ansprüche 1 bis 4, wobei eine Größe des zweiten Elements in der X-Richtung kleiner als eine Größe des Solarzellenmoduls in der X-Richtung ist.

6. Die Solarzellenanordnung (101, 201, 301, 401, 501, 601, 701) gemäß irgendeinem der Ansprüche 1 bis 5, wobei eine Größe des dritten Elements (23) in der Y-Richtung kleiner als eine Größe des zweiten Elements (22) in der X-Richtung ist.

7. Die Solarzellenanordnung (101, 201, 301, 401, 501, 601, 701) gemäß irgendeinem der Ansprüche 1 bis 6, wobei das dritte Element (23) ferner einen hervorstehenden Abschnitt aufweist, der zwischen den Solarzellenmodulen (3), die benachbart zueinander sind, gehalten ist.

8. Die Solarzellenanordnung (101, 201, 301, 401, 501, 601, 701) gemäß Anspruch 1, wobei die Mehrzahl von Solarzellenmodulen (3) zumindest entlang der Y-Richtung angeordnet ist, in der die Solarzellenanordnung geneigt ist, und
die Solarzellenanordnung ferner aufweist ein Schutzelement (33), das einen Unterseitenabschnitt eines ersten Solarzellenmoduls (3a) abstützt, das von der Mehrzahl von Solarzellenmodulen auf der untersten Seite in der Y-Richtung angeordnet ist, eine Mehrzahl von in der Y-Richtung langgestreckten Stützen, wobei das Schutzelement an den Stützen befestigt ist.

9. Die Solarzellenanordnung (101, 201, 301, 401, 501, 601, 701) gemäß Anspruch 8, wobei das Schutzelement (33) einen Körper, eine Schienennut, die in der X-Richtung langgestreckt ist und den Unterseitenabschnitt des ersten Solarzellenmoduls (3a) aufnimmt, und einen hohlen Abschnitt (33c) aufweist, der in dem Körper ausgebildet ist und sich in einer Längsrichtung der Schienennut erstreckt, und wobei die Schienennut einen geneigten Abschnitt (33e) zum Führen des Unterseitenabschnitts des ersten Solarzellenmoduls in die Schienennut aufweist.

10. Die Solarzellenanordnung (101, 201, 301, 401, 501, 601, 701) gemäß irgendeinem der Ansprüche 1 bis 9, ferner ein Höhenverstellungsmittel (M) zum Bewegen von mindestens dem zweiten Element (22) und dem dritten Element (23) des Montage-Elements (4) in einer Z-Richtung aufweisend, die orthogonal zu der X-Richtung und der Y-Richtung ist.

11. Die Solarzellenanordnung (101, 201, 301, 401, 501, 601, 701) gemäß Anspruch 10, ferner ein Stützelement (51) aufweisend, das unter dem ersten Element angeordnet ist und das erste Element (21) abstützt, wobei das Höhenverstellungsmittel (M) ein Außengewinde (51b) und ein Innengewinde (21e) aufweist, die auf dem ersten Element bzw. dem Stützelement vorgesehen sind, und die geeignet sind, ineinanderzugreifen.

12. Die Solarzellenanordnung (101, 201, 301, 401, 501, 601, 701) gemäß Anspruch 10, wobei das Höhenverstellungsmittel (M) als ein zylinderförmiges viertes Element (6) vorgesehen ist, das zwischen dem ersten Element (21) und dem zweiten Element (22) angeordnet ist, wobei das vierte Element einen ersten zylinderförmigen Abschnitt (61), der in einer Außenumfangsfläche davon einen ersten Schraubenabschnitt (61a) aufweist, und einen zweiten zylinderförmigen Abschnitt (62) aufweist, der in einer Innenumfangsfläche davon einen zweiten Schraubenabschnitt (62a) aufweist, wobei der zweite Schraubenabschnitt mit dem ersten Schraubenabschnitt in Eingriff ist,
der erste zylinderförmige Abschnitt auf dem ersten Element angeordnet ist und das zweite Element auf dem zweiten zylinderförmigen Abschnitt angeordnet ist,
der erste zylinderförmige Abschnitt an einem unteren Ende davon einen Eingriffsabschnitt aufweist, der mit dem ersten Element in Eingriff ist, und
eine Mittellinie des ersten zylinderförmigen Abschnitts, eine Mittellinie des zweiten zylinderförmigen Abschnitts und eine Mittellinie des Befestigungselements auf einer linearen Linie angeordnet sind.

## Revendications

1. Un réseau de cellules solaires (101, 201, 301, 401, 501, 601, 701), comportant :
une pluralité de modules de cellule solaire (3) agencés le long d'au moins une d'une direction X et d'une direction Y perpendiculaire à la direction X dans un état non-superposé, des surfaces arrières des modules de cellule solaire étant dirigées vers le bas ; et
un élément de montage (4) agencé entre des angles des modules de cellule solaire adjacents les uns aux autres,
l'élément de montage comprenant :
un premier élément (21) s'étendant dans la direction Y :
un deuxième élément (22) disposé sur le premier élément et comprenant une partie de support qui supporte la surface arrière du module de cellule solaire ;
un troisième élément (23) disposé sur le deuxième élément et comprenant une partie de serrage serrant le module de cellule solaire en coopération avec la partie de support du deuxième élément ; et
un élément de fixation (24) pénétrant verticalement à travers le deuxième élément et le troisième élément et fixant le deuxième élément et le troisième élément au premier élément,
le deuxième élément et le troisième élément étant mobiles le long de la direction Y,
dans lequel le premier élément (21) a une forme allongée, la direction Y étant une direction longitudinale de celui-ci, et
avant que le deuxième élément (22) et le troisième élément (23) ne soient fixés au premier élément par l'élément de fixation (24), le deuxième élément est mobile dans la direction Y et le troisième élément est mobile dans la direction X et la direction Y,
**caractérisé en ce que**
le deuxième élément (22) comprend, dans une deuxième surface principale (22d) de celui-ci, qui fait face au troisième élément (23), une deuxième partie de guidage (22f) guidant le mouvement du troisième élément dans la direction X par rapport au deuxième élément, et
le troisième élément comprend un trou de passage (23b) au travers duquel l'élément de fixage est inséré et qui est allongé dans la direction X, le trou de passage (23b) permettant que le troisième élément (23) soit déplacé dans la direction X avant que le troisième élément (23) ne soit fixé au premier élément (21).

2. Le réseau de cellules solaires (101, 201, 301, 401, 501, 601, 701) selon la revendication 1, dans lequel le deuxième élément (22) comprend, sur une première surface principale (22a) de celui-ci, faisant face au premier élément (21), une première partie de guidage (22c) guidant le mouvement du deuxième élément dans la direction Y.

3. Le réseau de cellules solaires (101, 201, 301, 401, 501, 601, 701) selon la revendication 2, dans lequel la première partie de guidage (22c) se compose d'une paire de premières saillies érigées à partir de la première surface principale (22a) du deuxième élément (22) et disposées dans des positions à distance les unes des autres dans une direction de la largeur du premier élément (21), les positions étant des deux côtés du premier élément dans la direction de la largeur du premier élément, et
une distance entre la paire de premières saillies dans la direction de la largeur du premier élément est supérieure ou égale à une taille transversale du premier élément.

4. Le réseau de cellules solaires (101, 201, 301, 401, 501, 601, 701) selon la revendication 1, dans lequel la deuxième partie de guidage (22f) est prévue par une paire de deuxièmes saillies (22e) érigées à partir de la deuxième surface principale (22d) du deuxième élément (22) et s'étendant dans la direction X,
la paire de deuxième saillies est disposée dans des positions à distance les unes des autres dans la direction Y, et
une distance entre la paire de deuxièmes saillies dans la direction Y est supérieure ou égale à une taille du troisième élément (23) dans la direction Y.

5. Le réseau de cellules solaires (101, 201, 301, 401, 501, 601, 701) selon l'une quelconque des revendications 1 à 4, dans lequel une taille du deuxième élément dans la direction X est inférieure à une taille du module de cellule solaire dans la direction X.

6. Le réseau de cellules solaires (101, 201, 301, 401, 501, 601, 701) selon l'une quelconque des revendications 1 à 5, dans lequel une taille du troisième élément (23) dans la direction Y est inférieure à une taille du deuxième élément (22) dans la direction X.

7. Le réseau de cellules solaires (101, 201, 301, 401, 501, 601, 701) selon l'une quelconque des revendications 1 à 6, dans lequel le troisième élément (23) comprend en outre une partie saillante tenue entre les modules de cellule solaire (3) adjacents les uns aux autres.

8. Le réseau de cellules solaires (101, 201, 301, 401, 501, 601, 701) selon la revendication 1, dans lequel la pluralité de modules de cellule solaire (3) est agencée au moins le long de la direction Y dans laquelle le réseau de cellules solaires est incliné, et
le réseau de cellules solaires comprend en outre un élément de protection (33) supportant une partie de côté inférieur d'un premier module de cellule solaire (3a) qui est positionné sur le côté le plus bas dans la direction Y parmi la pluralité de modules de cellule solaire, une pluralité de supports allongés dans la direction Y, dans lequel l'élément de protection est fixé aux supports.

9. Le réseau de cellules solaires (101, 201, 301, 401, 501, 601, 701) selon la revendication 8, dans lequel l'élément de protection (33) comprend un corps, une rainure de rail étant allongée dans la direction X et recevant la partie de côté inférieur du premier module de cellule solaire (3a), et une partie creuse (33c) formée dans le corps et s'étendant dans une direction de la largeur de la rainure de rail, et la rainure de rail comprend une partie inclinée (33e) pour guider la partie de côté inférieur du premier module de cellule solaire dans la rainure de rail.

10. Le réseau de cellules solaires (101, 201, 301, 401, 501, 601, 701) selon l'une quelconque des revendications 1 à 9, comprenant en outre des moyens d'ajustement de hauteur (M) pour déplacer au moins le deuxième élément (22) et le troisième élément (23) de l'élément de montage (4) dans une direction Z qui est orthogonale à la direction X et la direction Y.

11. Le réseau de cellules solaires (101, 201, 301, 401, 501, 601, 701) selon la revendication 10, comprenant en outre un élément de support (51) disposé au-dessous du premier élément et supportant le premier élément (21), dans lequel le moyen d'ajustement de hauteur (M) comprend une vis mâle (51b) et une vis femelle (21e), qui sont respectivement prévues sur le premier élément et l'élément de support, et qui sont capables d'engrener l'une dans l'autre.

12. Le réseau de cellules solaires (101, 201, 301, 401, 501, 601, 701) selon la revendication 10, dans lequel le moyen d'ajustement de hauteur (M) est prévu comme un quatrième élément cylindrique (6) disposé entre le premier élément (21) et le deuxième élément (22), le quatrième élément comprend une première partie cylindrique (61) comprenant une première partie de vis (61a) dans une surface périphérique extérieure de celle-ci, et une deuxième partie cylindrique (62) comprenant une deuxième partie de vis (62a) dans une surface périphérique intérieure de celle-ci, la deuxième partie de vis s'engrenant avec la première partie de vis,
la première partie cylindrique est disposée sur le premier élément et le deuxième élément est disposé sur la deuxième partie cylindrique,
la première partie cylindrique comprend, à une extrémité inférieure de celle-ci, une partie de prise qui est en prise avec le premier élément, et
une ligne médiane de la première partie cylindrique, une ligne médiane de la deuxième partie cylindrique, et une ligne médiane de l'élément de fixation sont disposées sur une ligne linéaire.
